Europäisches Patentamt

European Patent Office

Office européen des brevets

(19)

(11) Numéro de publication: **0 159 243**
**B1**

(12)

# FASCICULE DE BREVET EUROPEEN

(45) Date de publication du fascicule du brevet:
**14.06.89**

(51) Int. Cl.⁴: **G 01 N 31/16**

(21) Numéro de dépôt: **85400565.9**

(22) Date de dépôt: **22.03.85**

(54) Procédé et dispositif d'analyse physico-chimique automatique d'une solution à flux continu.

(30) Priorité: **23.03.84 FR 8404574**

(43) Date de publication de la demande:
**23.10.85 Bulletin 85/43**

(45) Mention de la délivrance du brevet:
**14.06.89 Bulletin 89/24**

(84) Etats contractants désignés:
**AT BE CH DE GB IT LI LU NL SE**

(56) Documents cités:
**CH-A- 572 454**
**DE-A- 2 031 336**
**DE-A- 2 642 859**
**FR-A- 981 465**
**US-A- 3 192 017**
**US-A- 3 195 982**

(73) Titulaire: **INSTITUT DE RECHERCHES HYDROLOGIQUES, 10, rue Ernest Bichat, F-54000 Nancy (FR)**

(72) Inventeur: **Colin, François, 6 Rue du Fort Ecuelle, F-54770 Bouxieres Aux Chenes (FR)**

(74) Mandataire: **Moncheny, Michel et al, c/o Cabinet Lavoix 2 Place d'Estienne d'Orves, F-75441 Paris Cedex 09 (FR)**

ACTORUM AG

## Description

La présente invention a pour objet un procédé et un dispositif d'analyse physique, physico-chimique, chimique ou biochimique automatique d'une solution à flux continu.

La conduite des procédés, qu'il s'agisse de procédés de fabrication ou de procédés d'autre nature (par exemple de dépollution), mettant en œuvre des phénomènes de nature physique, physico-chimique, chimique ou microbiologique, nécessite une connaissance précise des flux à traiter, en cours de traitement ou qui en sont issus. Cette connaissance peut porter selon les cas: sur des paramètres physico-chimiques descriptifs, par exemple de l'acidité, de la basicité ou du caractère oxydo-réducteur du milieu; sur des concentrations en espèces chimiques diverses (ions, molécules); ou sur des grandeurs à caractère plus global (salinité totale par exemple).

La nécessité de connaître de façon quasi-permanente ces paramètres et grandeurs est d'autant plus importante que ceux-ci sont évolutifs au cours du temps et qu'ils interviennent sur les performances des procédés.

Une première approche d'analyse consiste à effectuer un suivi de ces grandeurs par application, en laboratoire, des méthodes classiques de l'analyse physico-chimique et chimique. Cette démarche trouve ses limites dans le nombre d'échantillons qu'il est nécessaire d'analyser et surtout dans les temps de réponse souvent incompatibles avec la vitesse de variation des paramètres au cours du temps.

La solution la plus fréquemment appliquée actuellement consiste à recourir à des appareillages automatisés qu'on peut regrouper sous le terme générique d'analyseurs industriels. Pratiquement, tous ces appareils constituent des extrapolations des méthodes de laboratoire dont ils reproduisent de façon cyclique ou séquentielle les différentes étapes par exemple: introduction dans une cellule de mesure d'un volume connu d'échantillon, introduction à faible débit d'une solution titrée de réactif, détection de la fin de réaction, affichage du résultat, vidange et nettoyage de la cellule, et périodiquement réétalonnage de l'appareil.

L'utilisation de tels systèmes se heurte aux inconvénients suivants:
- complexité de conception des analyseurs présentant une incidence importante sur leur coût et surtout leur fiabilité en milieu industriel;
- impossibilité de fonctionnement rigoureusement continu, ne permettant pas d'appréhender des variations rapides;
- domaine d'utilisation limité sur le plan de la gamme de mesure par suite de la saturation du signal de mesure pour les fortes valeurs de paramètres ou concentrations mesurées (non linéarité) et du manque de sensibilité aux faibles niveaux; de plus, toute tentative de remédier à l'un de ces deux inconvénients aggrave l'autre simultanément;
- fragilité des capteurs de mesure, qu'il s'agisse de capteurs colorimétriques, électrochimiques, turbidimétriques, etc. et nécessité d'une électronique associée complexe (conditionnement et traitement du signal).

En conséquence, il est avantageux d'utiliser des systèmes de mesure rigoureusement continus. Les plus répandus sont constitués par des électrodes spécifiques délivrant un signal électrique (potentiel) directement en relation avec la concentration ionique du milieu dans lequel elles se trouvent immergées. L'exemple le plus connu est l'électrode de verre permettant la mesure du pH qui caractérise les propriétés acido-basiques d'un milieu aqueux. Cette mesure ne permet toutefois pas d'accéder à la connaissance de l'acidité ou de la basicité titrables qui est pourtant primordiale. Les autres électrodes dites «spécifiques» et développées pour de nombreux ions (nitrates, cyanures, sulfures, sodium, calcium, etc.) souffrent en réalité de nombreux phénomènes d'interférence qui en limitent l'utilisation dans des milieux complexes ou contaminés. Par ailleurs, les nécessités de conditionnement des électrodes et de réétalonnage fréquent conduisent finalement, malgré la simplicité du principe, à la réalisation d'appareils compliqués et coûteux.

Une technique de laboratoire appelée F.I.A. (Flow Injection Analysis, par J. Kuzicka, E. H. Hansen, éd. John Wiley and Sons, 1981) a été récemment mise au point. Elle consiste à injecter, dans un flux continu d'échantillon à analyser ou de solution de réactifs, de très petites quantités (1 à 200 microlitres, le plus généralement 25 µl) respectivement de réactif ou d'échantillons à analyser et à effectuer un traitement mathématique du signal fourni par un détecteur (colorimétrique, électrochimique, etc.) pour en déduire la concentration de la solution à titrer. Cette technique d'analyse non rigoureusement continue permet d'obtenir des résultats fréquence élevée. Elle présente toutefois les inconvénients de demeurer du domaine du laboratoire (fragilité), de n'être pas d'utilisation générale et de nécessiter une conception d'appareillage propre à chaque élément ou constituant devant être analysé.

Au niveau industriel, une solution intéressante consiste à mélanger un flux continu de liquide à analyser et un flux continu de solution de réactif ou de diluant en faisant varier l'importance des débits correspondants, de façon à maintenir en permanence constant le signal d'un détecteur monté sur le flux résultant. Dans ces conditions, le rapport des débits des deux flux est une mesure de la concentration du liquide à analyser. Divers appareils de titrage utilisant ce principe ont été décrits, notamment dans les brevets français publiés sous les no 2 071 633, 2 327 543 et 991 465, dans le brevet suisse no 572 454 ou dans le brevet des Etats-Unis no 4 073 822.

Le principe même de conception d'un tel appareil conduit à des avantages évidents, notamment du fait que le capteur ou détecteur ne joue plus le rôle d'appareil de mesure proprement dit, mais simplement d'appareil de zéro ou d'appareil de repère d'un point de consigne choisi dans la zone de linéarité ou de sensibilité maximale de ce capteur. Le capteur est donc maintenu en permanence dans sa zone de fonctionnement optimal.

Par ailleurs, la fonction de mesure est, en fait, assurée par le dispositif de réglage et d'asservissement des deux flux qui est sur le plan technologique facilement réalisable (utilisation de pompes volumétriques à débit continu à vitesse asservissable et mesurable). Un tel dispositif peut être de conception particulièrement robuste et adapté à l'usage en milieu industriel.

Selon ces dispositifs, soit la pompe de solution de réactif, soit celle du liquide à titrer est maintenue à débit constant, tandis que l'autre varie; éventuellement le débit des deux pompes varie.

Selon les dispositifs décrits dans le brevet des Etats-Unis no 3 192 017 et d'U.R.S.S. no 178 563, les débits des deux solutions sont pulsés avec une même fréquence et un décalage de phase. La mesure consiste alors à déterminer l'instant de chaque période où sera atteint le point d'équivalence du titrage et à situer son déphasage par rapport à la variation de débit des pompes utilisées.

Les difficultés rencontrées dans la conception, la réalisation et l'exploitation des appareils automatiques de titrage à débit non pulsé décrits précédemment sont les suivants:
- difficulté de trouver des pompes à débit continu et sans pulsation (les pompes à écrasement de tuyau (péristaltiques) conviennent mal pour ces systèmes à réponse rapide, car il est nécessaire d'utiliser une cellule de titrage de volume suffisant pour écrêter ces pulsations,
- faible dynamique de réponse liée à la gamme de variation de débits des pompes utilisées,
- manque de fiabilité et nécessité de maintenance importante pour des motovariateurs comportant un réducteur mécanique.

En dehors de ces difficultés d'ordre technique, les dispositifs précédents souffrent d'une inadaptation fondamentale aux courbes de titrage présentant une réponse (en fonction de la dose de réactifs) à front raide. Dans ce cas, il est en effet extrêmement difficile de se maintenir au point de consigne (ou point d'équivalence). C'est le cas typique du titrage d'une solution d'acide fort par une base forte (ou réciproquement) où la courbe de titrage est très raide, c'est-à-dire que la variation du signal est très brusque au point de neutralisation.

Un moyen de résoudre ce problème a été proposé dans le brevet des Etats-Unis no 3 195 982. Il consiste à repérer non le point d'équivalence du titrage, mais une partie déterminée (épaulement) de la courbe de titrage en un endroit où celle-ci présente une pente modérée qui peut être mesurée sans problème. Le principe mis en œuvre consiste à réaliser une cellule différentielle dont l'un des compartiments comportant une électrode de mesure recevra un débit de réactif et le second un débit légèrement différent. Les débits d'alimentation en solution à titrer de chacun des compartiments sont identiques. La mesure consiste à déterminer en permanence quel est le débit qui permettra de mesurer en permanence une différence de potentiel constante et fixée entre les électrodes situées chacune dans un compartiment de la cellule différentielle.

Ce dispositif présente des inconvénients résultant de sa conception complexe, de sa sensibilité à l'encrassement (présence de tubes capillaires traversés soit par le liquide à titrer, soit par le réactif de titrage) et sur un plan plus fondamental par le fait que le fonctionnement de cet appareil suppose que la courbe de titrage ait une forme prédéterminée, ce qui ne sera pas forcément le cas si la nature de ce que l'on veut titrer globalement (par exemple l'acidité) varie au cours du temps, comme ce peut être le cas par exemple pour des rejets d'eaux usées. Enfin, il est nécessaire de mesurer de façon précise un faible écart entre les signaux issus des deux compartiments de la cellule différentielle.

On a maintenant trouvé un procédé qui s'applique préférentiellement aux réactions caractérisées par une forte variation d'un paramètre mesurable au voisinage du point d'équivalence ou de fin de réaction.

L'invention a donc pour objet un procédé d'analyse physique, physico-chimique, chimique ou biochimique automatique d'une solution à flux continu dans lequel, à un débit connu de la solution contenant la substance devant être dosée, est ajouté un débit déterminé d'une solution contenant au moins une espèce titrante réactive avec ladite substance, l'état du mélange ainsi obtenu étant défini par au moins un paramètre mesurable et dans lequel on ajuste le flux (débit ou concentration) de l'une des solutions de telle manière qu'une faible variation de ce flux entraîne une forte variation du paramètre mesurable, caractérisé en ce que l'on mesure les deux valeurs du paramètre correspondant à cette variation de part et d'autre de la valeur de ce paramètre correspondant au point d'équivalence ou de fin de réaction du titrage (appelé ci-après point de consigne) sur deux mélanges réalisés respectivement à partir de deux flux légèrement différents de la solution contenant l'espèce titrante réactive et d'un flux identique de la solution devant être dosée ou à partir de deux flux légèrement différents de la solution devant être dosée et d'un flux identique de la solution contenant l'espèce titrante réactive.
Suivant d'autres caractéristiques du procédé:
- on obtient les deux valeurs du paramètre mesuré sur un mélange modifié par variation périodique du flux de l'une des deux solutions dont il est formé;
- on fait varier simultanément le flux des deux solutions afin de couvrir une large gamme de mesure.

L'invention a également pour objet un dispositif d'analyse automatique d'une solution à flux continu pour la mise en œuvre du procédé décrit ci-dessus, dispositif comprenant des conduits de la solution devant être analysée et de la solution contenant des espèces titrantes réactives, caractérisé en ce qu'il comprend deux circuits d'analyse constitués de deux pompes à débit fixe servant à la propulsion de l'une des deux solutions et deux pompes à débit variable servant à la propulsion de l'autre solution et asservies par deux détecteurs par l'intermédiaire d'un servomécanisme réglable de façon à ce que les signaux qui sont issus du détecteur soient en permanence de part et d'autre du point d'équivalence ou de fin de réaction de titrage.

Selon diverses variantes:

– les deux pompes servant à la propulsion de l'une au moins des solutions sont remplacées par une pompe double;

– le dispositif comprend un circuit d'analyse composé d'une pompe à débit fixe et d'une pompe à débit variable périodiquement, asservie par un détecteur par l'intermédiaire d'un servomécanisme.

L'invention est exposée ci-après plus en détail à l'aide des dessins annexés représentant seulement des modes de réalisation.

Sur ces dessins:

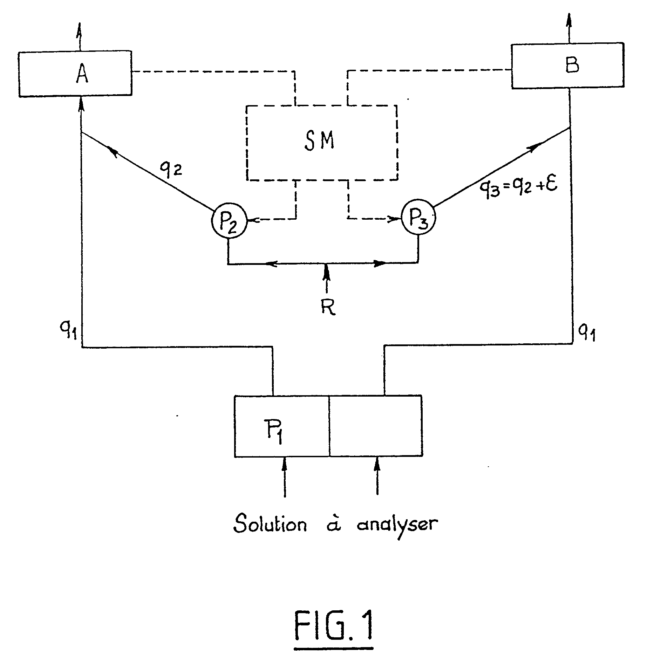

Les Fig. 1 à 3 sont des vues schématiques de trois exemples de réalisation du dispositif selon l'invention.

La variante représentée sur la Fig. 1 permet de bien comprendre le principe de l'invention et son application, et d'en saisir les avantages les plus évidents. Il comprend deux détecteurs recevant chacun un flux identique de solution à analyser et deux flux légèrement différents de solution titrée de réactif de même concentration, ces flux étant asservis par les détecteurs de façon à ce que les signaux issus des détecteurs soient en permanence situés de part et d'autre du point de consigne, leur écart étant réglé pour éviter tout phénomène de battements.

Une pompe $P_1$ à double canal et débit fixé prélève deux débits identiques $q_1$ de la solution à analyser. Une pompe $P_2$ commandée par un servomécanisme SM prélève un débit $q_2$ de solution titrée de réactif R qui est mélangé à l'un des débits $q_1$ de solution à analyser. Le mélange s'écoule ensuite dans un détecteur A. Une pompe $P_3$ commandée par le même servomécanisme SM et réglée pour avoir en permanence un débit $q_3 = q_2 + \varepsilon$, légèrement supérieur au débit $q_2$, injecte de la solution réactive R dans l'autre débit $q_1$ de solution à analyser, le mélange correspondant s'écoulant dans le détecteur B. Le servomécanisme de commande des pompes $P_2$ et $P_3$ est conçu ou réglé de telle façon que les signaux issus des détecteurs A et B soient situés de part et d'autre du point d'équivalence du titrage. La valeur du débit véhiculé par l'une des pompes $P_2$ ou $P_3$ est alors à chaque instant proportionnelle à la concentration de la solution à analyser. Ce débit peut être lui-même calculé à partir de la vitesse de rotation de l'une des pompes $P_2$ ou $P_3$ si celles-ci sont volumétriques. L'indicateur de vitesse de la pompe peut alors être directement gradué en valeur de concentration du liquide soumis à titrage.

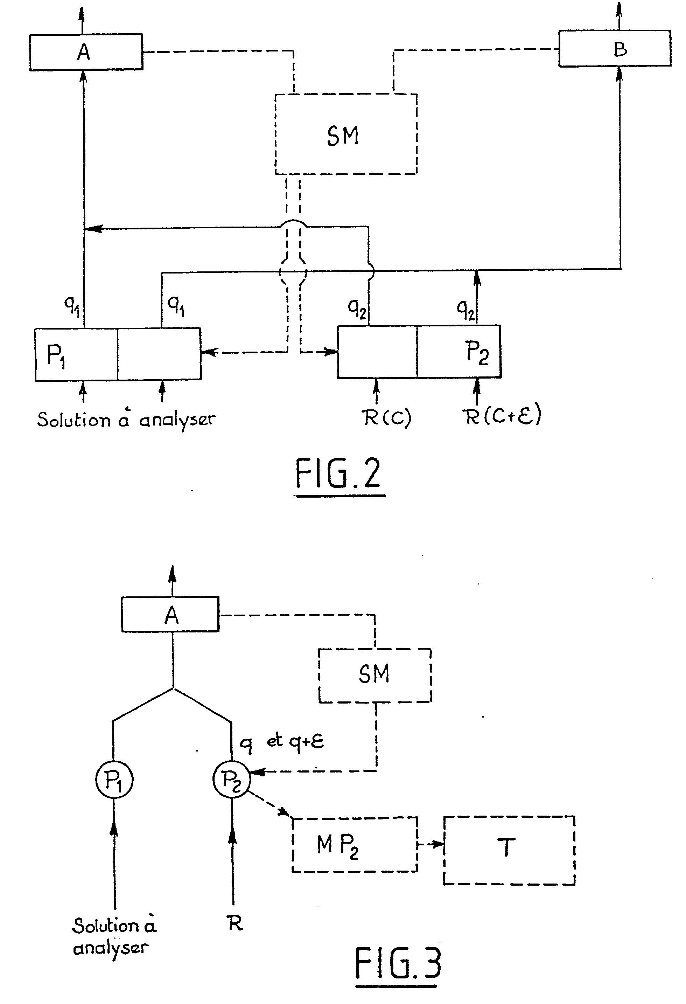

Une variante plus intéressante minimisant le nombre de pompes à utiliser est représentée sur la Fig. 2. Elle consiste à utiliser aussi pour le réactif une pompe double $P_2$ (remplaçant les pompes $P_2$ et $P_3$ du dispositif selon la Fig. 1), alimentée par des solutions titrées de réactif R à des concentrations légèrement différentes (C) et (C+$\varepsilon$) véhiculées à des débits identiques $q_2$. Pour le reste, le fonctionnement de ce dispositif est le même que celui de la Fig. 1.

Dans les deux précédents cas, les détecteurs A et B peuvent être éventuellement remplacés par un détecteur différentiel, le servomécanisme agissant alors sur les pompes $P_3$ et $P_2$ de façon à maximiser le signal issu de ce détecteur différentiel.

Une plus large gamme de mesure peut être couverte si le débit de la pompe $P_1$ est également variable. Dans ce cas, le servomécanisme SM commande à la fois le débit $q_1$ et le groupe des débits $q_3$ et/ou $q_2$ et peut être conçu de façon telle que le débit $q_1$ diminue quand le débit $q_2$ augmente, ou vice-versa (fonctionnement antagoniste des deux pompes).

Les descriptions en regard des Fig. 1 et 2 permettent de montrer les avantages les plus évidents de l'invention:

– utilisation des détecteurs comme points de repère et non comme instruments de mesure. Leur conception peut donc être extrêmement simplifiée, de même que leur électronique associée. Dans de nombreux cas, un détecteur donnant une réponse par «tout ou rien» peut suffire;

– en conséquence du point précédent, insensibilité de l'appareil à toutes les causes de dérive des détecteurs (encrassement, fluctuation de l'électronique, etc.);

– une mesure complexe peut être ramenée à une simple mesure de débit et si celui-ci est assuré par une pompe volumétrique, à une mesure de vitesse de rotation de pompe ou au calcul du rapport des vitesses de rotation de deux pompes ou de leurs moteurs d'entraînement;

– le fonctionnement de l'appareil ne présuppose pas une forme particulière de courbe de titrage;

– le fonctionnement de l'appareil peut être rigoureusement continu; et

– facilité de réglage et d'adaptation à la forme de la courbe de titrage en jouant sur la valeur de la différence flux/débit ou concentration en espèces titrantes entre les deux canaux de l'appareil.

Une autre variante, préférée selon l'invention dans le cas où la vitesse de variation de la concentration de la solution à analyser est relativement faible, est représentée sur la Fig. 3. Il consiste en un appareil monocanal dans lequel on fait varier périodiquement, au moyen de la pompe $P_2$, commandée par un servomécanisme SM, le flux de la solution contenant l'espèce titrante réactive R, tandis que l'on maintient constant, au moyen de la pompe $P_1$, le flux de la solution à analyser. A cet effet, on fait pulser (en débit ou concentration) le flux de la solution titrante de réactif R consécutivement de la valeur q à la valeur q+$\varepsilon$. La durée des pulsations et l'amplitude de $\varepsilon$ sont choisies en fonction de la réponse du système, le signal issu du détecteur A ayant la même fréquence de pulsations. La mesure consiste à ajuster en permanence la valeur de q pour maximiser l'amplitude de pulsation du signal issu du détecteur A. La vitesse de la pompe $P_2$ mesurée par le compteur $MP_2$ est alors proportionnelle à la concentration de la solution analysée et peut être traitée pour l'affichage direct ou la mise en mémoire de la concentration dans l'appareil T.

Selon d'autres variantes:

- on inverse les fonctions des pompes $P_1$ et $P_2$, c'est-à-dire que l'on fait varier le flux de la solution à analyser, tandis que l'on maintient constant le flux de la solution titrante R;

- on prend l'amplitude de la variation à chaque instant comme fonction de l'écart du signal donné par le détecteur (point haut ou point bas) par rapport au point de consigne;

- on prend le niveau de la «ligne de base» du débit de réactif comme fonction de l'écart du signal donné par le détecteur par rapport au point de consigne;

- afin d'augmenter la gamme de mesure, les deux pompes $P_1$ et $P_2$ sont à débit variable et à sens de variation opposé (fonctionnement antagoniste);

- dans le cas de l'analyse de solutions contenant des liquides difficilement miscibles, notamment pour des raisons de densité ou monte en ligne et en amont du détecteur, un dispositif de mélange.

La conception d'un système de mesure étant optimisée pour chaque application envisagée, la qualité et les performances de l'analyseur automatique à réaliser sont très largement fonction du choix des composants utilisés pour la réalisation.

A titre d'exemples non limitatifs on indiquera les appareillages suivants utilisables dans le cadre de l'invention, uniquement pour en faciliter la réalisation:

Pompes

On choisira préférablement des pompes volumétriques et, en particulier, dans les dispositifs selon les Fig. 1 et 2, des pompes à débit rigoureusement continu et sans pulsation. On pourra utiliser avec profit des pompes à vis sans fin excentrée pouvant traiter des débits dans une gamme allant de 0,1 à 80 litres/heure.

Dans le cas où il est nécessaire d'utiliser des débits encore plus faibles (utilisation de réactifs très coûteux) il sera possible d'utiliser des pompes spécialement développées pour les applications en chromatographie liquide (type H.P.L.C.) répondant aux critères fixés, mais beaucoup plus coûteuses.

Pour le dispositif selon la Fig. 3, (pulsation de l'un des flux) il sera éventuellement possible de recourir à une pompe péristaltique pour réaliser le débit pulsé. Une alternative préférable consistera à utiliser une pompe à débit continu mais programmée en vitesse pour réaliser facilement des pulsations d'amplitude et de fréquence.

Asservissement

L'entraînement des pompes à débit constant sera effectué par un moteur électrique tournant à vitesse constante.

L'entraînement des pompes à débit variable sera effectué de préférence par un moteur électrique à vitesse programmable. Ces moteurs devront couvrir une large gamme de vitesse, posséder une faible inertie et une grande accélération pour manifester une grande rapidité de réponse, et enfin disposer d'un couple de sortie en permanence suffisant pour entraîner la pompe.

L'asservissement de la vitesse du moteur pourra être commandé par un simple régulateur, ou bien un microordinateur susceptible d'assurer simultanément des fonctions de traitement du signal du détecteur, asservissement des flux, traitement du signal, affichage ou mise en mémoire des résultats, exprimés directement en terme de concentration; celui-ci peut avoir pour fonction:

de gérer simultanément (micro-ordinateur multitâches) plusieurs appareils de mesure déterminant en continu des paramètres différents,

et d'utiliser les résultats pour assurer simultanément la régulation ou la conduite automatisée du procédé de fabrication ou traitement considéré.

L'asservissement sera réalisé par variation électronique de la vitesse du ou des moteurs entraînant les pompes au moyen d'un dispositif faisant varier l'intensité et/ou la tension appliquée au(x) moteur(s) en fonction de l'écart constaté entre le signal du détecteur et une valeur de consigne fixe (cas de l'utilisation d'un régulateur) ou programmé (cas de l'utilisation d'un microordinateur).

Détecteurs

Les détecteurs seront choisis en fonction de la réaction mise en œuvre pour l'analyse. Nous donnons ci-dessous à titre d'exemple, une liste non-exhaustive:

- les détecteurs colorimétriques (ou spectrophotométriques dans les domaines visible, IR, U.V.) utilisables pour toute réaction développant une coloration proportionnelle à la concentration à mesurer (utilisation des méthodes colorimétriques ou spectrophotométriques de l'analyse chimique classique) ou pour détecter un seuil ou une fin de réaction (utilisation d'indicateurs colorés à réponse par tout ou rien);

- les détecteurs optiques turbidimétriques ou néphélométriques, à indice de réfraction, etc.;

- les détecteurs électrochimiques potentiométriques comprenant les électrodes de verre pour la mesure du pH, les électrodes de métal noble pour la mesure du potentiel d'oxydo-réduction et les électrodes ioniques spécifiques;

- Les détecteurs électrochimiques, ampérométriques, polarographiques, conductimétriques, etc., et

- les détecteurs biochimiques.

Tous ces détecteurs et leur électronique associée seront choisis dans la conception la plus simple permettant la détection d'un seuil.

**Revendications**

1. Procédé d'analyse physique, physicochimi- que, chimique ou biochimique automatique d'une solution à flux continu, procédé dans lequel à un débit connu ($q_1$) de solution contenant la substance devant être dosée est ajouté un débit déterminé $q_2$ d'une solution contenant au moins une espèce titrante réactive avec ladite substance, l'état du mélange ainsi obtenu étant défini par au moins un paramètre mesurable et dans lequel on ajuste le flux de l'une des solutions de telle manière qu'une faible variation de ce flux entraîne une forte variation du paramètre mesurable caractérisé en ce que l'on mesure les deux valeurs du paramètre correspondant à cette variation de part et d'autre de la valeur de ce paramètre correspondant du point d'équivalence ou de fin de réaction du titrage sur deux mélanges réalisés respectivement à partir de deux flux légèrement différents de la solution contenant l'espèce titrante réactive et d'un flux identique de la solution devant être dosée ou à partir de deux flux légèrement différents de la solution devant être dosée et un flux identique de la solution contenant l'espèce titrante réactive.

2. Procédé selon le préambule de la revendication 1, caractérisé en ce que l'on obtient les deux valeurs du paramètre mesuré correspondant à cette variation de part et d'autre de la valeur de ce paramètre correspondant au point d'équivalence ou de fin de réaction du titrage sur un mélange médifié par variation périodique du flux de l'une des deux solutions dont il est formé.

3. Procédé selon la revendication 2, caractérisé en ce que l'on fait varier simultanément le flux des deux solutions.

4. Dispositif d'analyse automatique d'une solution à flux continu pour la mise en œuvre du procédé selon la revendication 1 ou 2, comprenant des conduits de la solution devant être analysée et de la solution contenant des espèces titrantes réactives, caractérisé en ce qu'il comprend deux circuits d'analyse constitués de deux pompes à débit fixe ($P_1$) servant à la propulsion de l'une des deux solutions, et deux pompes à débit variable ($P_2$, $P_3$) servant à la propulsion de l'autre solution et asservies par deux détecteurs (A, B), par l'intermédiaire d'un servomécanisme (SM) réglable de façon à ce que les signaux qui sont issus du détecteur soient en permanence de part et d'autre du point d'équivalence ou de fin de réaction du titrage.

5. Dispositif selon la revendication 4, caractérisé en ce que les deux pompes servant à la propulsion de l'une au moins des solutions sont remplacées par une pompe double.

6. Dispositif selon le préambule de la revendication 4, caractérisé en ce qu'il comprend un circuit d'analyse composé d'une pompe à débit fixe et d'une pompe à débit variable périodiquement, asservie par un détecteur par l'intermédiaire d'un servomécanisme.

7. Dispositif selon la revendication 4, caractérisé en ce que toutes les pompes sont à débit variable, la variation des pompes propulsant la solution devant être dosée étant antagoniste des pompes propulsant la solution contenant les espèces titrantes réactives.

8. Dispositif selon l'une quelconque des revendications 4 à 7, caractérisé en ce qu'il comprend, en amont du détecteur, un dispositif de mélange.

## Patentansprüche

1. Verfahren zur physikalischen, physikalischchemischen, chemischen oder biochemischen automatischen Analyse einer kontinuierlich strömenden Lösung, bei dem einer bekannten Lösungsrate ($q_1$), die die Substanz vor ihrer Dosierung enthält, eine vorbestimmte Rate ($q_2$) einer Lösung hinzugefügt wird, die wenigstens eine titrierte (titrante) reaktive Art bzw. Stoffart mit der Substanz enthält, wobei der so erhaltene Mischungszustand wenigstens durch einen messbaren Parameter definiert ist, und bei dem die Strömung einer der Lösungen derart eingestellt wird, dass eine leichte Änderung dieser Strömung eine starke Änderung des messbaren Parameters mit sich bringt, dadurch gekennzeichnet, dass die beiden Werte des Parameters, die dieser Änderung entsprechen beiderseits des Wertes dieses Parameters gemessen werden, entsprechend dem Gleichgewichtspunkt oder dem Punkt des Reaktionsendes der Titrierung bei zwei Mischungen, die entsprechend ausgehend von zwei leicht unterschiedlichen Strömungen der Lösung realisiert werden, die die reaktive titrierte Stoffart enthält und eines identischen Stromes der Lösung vor ihrer Dosierung oder ausgehend von zwei leicht unterschiedlichen Strömen der Lösung vor ihrer Dosierung und einem identischen Strom der Lösung, der die reaktive titrierte Stoffart enthält.

2. Verfahren nach dem Oberbegriff des Anspruchs 1, dadurch gekennzeichnet, dass die beiden Werte des gemessenen Parameters entsprechend der Änderung beiderseits des Wertes dieses Parameters entsprechend dem Gleichgewichtspunkt oder dem Endpunkt der Reaktion der Titrierung für eine modifizierte Mischung erhalten werden durch periodische Veränderung der Strömung der einen der beiden Lösungen von der sie gebildet ist.

3. Verfahren nach Anspruch 2, dadurch gekennzeichnet, dass der Strom der beiden Lösungen gleichzeitig verändert wird.

4. Vorrichtung zur automatischen Analyse einer kontinuierlich fliessenden Lösung zur Ausführung des Verfahrens nach Anspruch 1 oder 2, welche Leitungen der Lösung vor ihrer Analyse und der Lösung aufweist, die reaktive titrierte Arten bzw. Stoffarten enthält, dadurch gekennzeichnet, dass sie zwei Analysekreise aufweist, die aus zwei Pumpen mit fixer Rate ($P_1$) gebildet sind, die dem Antrieb bzw. Vortrieb einer der beiden Lösungen dienen, und zwei Pumpen mit variabler Rate ($P_2$, $P_3$) aufweist, die dem Vortrieb der anderen Lösung dienen, und mit zwei Detektoren (A, B) über einen Servomechanismus (SM) gesteuert werden, wobei sie derart einstellbar sind, dass die von dem Detektor ausgegebenen Signale ständig sich beiderseits des Gleichgewichtspunkts oder dem Punkt des Reaktionsendes der Titrierung befinden.

5. Vorrichtung nach Anspruch 4, dadurch gekennzeichnet, dass die beiden Pumpen die dem Vortrieb wenigstens einer der Lösungen dienen durch eine Doppelpumpe ersetzt sind.

6. Vorrichtung nach dem Oberbegriff des Anspruchs 4, dadurch gekennzeichnet, dass sie einen Analysekreis aufweist, der aus einer Pumpe mit fixer Rate und einer Pumpe mit periodisch variabler Rate gebildet ist, die durch einen Detektor über einen Servomechanismus steuerbar ist.

7. Vorrichtung nach Anspruch 4, dadurch gekennzeichnet, dass alle Pumpen eine variable Rate aufweisen, wobei die Änderung der Pumpen, die die Lösung vor ihrer Dosierung vorantreiben den Pumpen entgegenwirkend sind, die die Lösung vorantreiben, die die reaktiven titrierten Arten enthält.

8. Vorrichtung nach einen der Ansprüche 4 bis 7, dadurch gekennzeichnet, dass sie oberhalb des Detektors eine Mischungsvorrichtung aufweist.

## Claims

1. Method of automatic physical, physicochemical, chemical or biochemical analysis of a solution at continuous flux, wherein a known flow rate (91) of solution containing the substance which is to be titrated is added to the defined flow rate 92 of a solution containing at least one titrate species which reacts with said substance, the state of the mixture thus obtained being defined by at least one measurable parameter, and wherein the flow of one of the solutions is adjusted so that a slight variation in this flow results in a substantial variation in the measurable parameter, characterised in that the two values of the parameter corresponding to this variation, on each side of the value of this parameter corresponding to the point of equivalence or the end of the reaction of titration, are measured on two mixtures produced respectively from two slightly different flows of the solution containing the reactive titrated species and a flow identical to the solution which is to be titrated starting from two flows which are slightly different from the solution which is to be titrated and one flow which is identical to the solution containing the reactive titrating species.

2. Process according to the preamble of claim 1, characterised in that the two values of the measured parameter corresponding to this variation on either side of the value of this parameter corresponding to the point of equivalence or the end of the reaction of titration are obtained using a mixture modified by periodic variation of the flow and one of the two solutions from which it is formed.

3. Process as claimed in claim 2, characterised in that the flows of the two solutions are varied simultaneously.

4. Apparatus for automatically analysing a solution with continuous flow for implementing the process according to claim 1 or 2, comprising ducts for conveying the solution which is to be analysed and the solution containing the reactive titrating species, characterised in that it comprises two analysis circuits consisting of two fixed flow pumps ($P_1$) serving to propel one of the two solutions and two variable flow pumps ($P_2$, $P_3$) serving to propel the other solution and controlled by two detectors (A, B) via a servomechanism (SM) which is regulatable so that the signals emitted by the detector are permanently on both sides of the point of equivalence or the end of the titrating reaction.

5. Apparatus as claimed in claim 4, characterised in that the two pumps serving to propel at least one of the solutions are replaced by a double pump.

6. Apparatus according to the preamble of claim 4, characterised in that it comprises an analysis circuit consisting of a fixed flow pump and a periodically variable flow pump, controlled by a detector via a servomechanism.

7. Apparatus according to claim 4, characterised in that all the pumps have a variable flow rate, the variation of the pumps which propel the solution which is to be titrated being antagonistic to the pumps propelling the solution containing the reactive titrating species.

8. Apparatus according to any one of claims 4 to 7, characterised in that it comprises mixing means upstream of the detector.

$$q_3 = q_2 + \varepsilon$$

Solution à analyser

# FIG.1

FIG.2

FIG.3